# EUROPEAN PATENT APPLICATION

(11) **EP 2 957 751 A1**
(43) Date of publication of application: **23.12.2015**
(21) Application number: 15171010.0
(22) Date of filing: 08.06.2015
(51) Int. Cl.: F02D 41/00

(54) **THROTTLE CONTROL DEVICE OF ENGINE WITH SUPERCHARGER**

(30) Priority: 12.06.2014 JP 2014121486
(71) Applicant: Toyota Jidosha Kabushiki Kaisha, Toyota-shi, Aichi-ken 471-8571 (JP)
(72) Inventor: MATSUNAGA, Makoto, TOYOTA-SHI, AICHI-KEN, 471-8571 (JP)
(74) Representative: Intès, Didier Gérard André

(57) **Abstract**

The invention relates to a control device for controlling an opening degree of a throttle valve (6) that is provided in an intake passage (3) of an engine (1) with a supercharger (4). When the throttle valve (6), which is in an open valve state, closes in response to an accelerator operation amount being reduced down to "0" by the driver in order to, for instance, decelerate a vehicle, an opening degree of the throttle valve (6) is corrected so that the throttle valve (6) opens, when a differential pressure (ΔP) between pressure upstream of the throttle valve (6) and pressure downstream thereof in an intake passage (3) is equal to or greater than a determination value (h). An increase in the differential pressure (ΔP) is suppressed through correction so that the throttle valve (6) opens. As a result, when a force derived from the differential pressure (ΔP) acts on the throttle valve (6), a contact of the valve (6) with an inner wall of the intake passage (3) due to deformation of the throttle valve (6) can be suppressed.

## Description

### 1. Field of the Invention

The invention relates to a throttle control device of an engine with supercharger.

### 2. Description of Related Art

In an engine with supercharger described in Japanese Patent Application Publication No. 8-144812 (JP 8-144812 A), a throttle valve is provided in an intake passage, downstream of a supercharger. Accordingly, the pressure in the intake passage, upstream of the throttle valve, increases through the operation of the supercharger. When the throttle valve in the intake passage is closed, the opening degree of the throttle valve is smallest, and the amount of air that passes through the portion of the intake passage corresponding to the throttle valve is likewise smallest. As a result, when the throttle valve is closed, the pressure in the intake passage downstream of the throttle valve decreases promptly through closing of the valve, while the pressure upstream of the valve is maintained at a comparatively high value through the inertial operation of the supercharger.

In the engine with supercharger, when the throttle valve in an open valve state closes, there increases a differential pressure between pressure upstream of the throttle valve and pressure downstream of the throttle valve in the intake passage, and a force derived from that differential pressure acts on the throttle valve, causing the throttle valve to deform, at the time when the throttle valve is being closed. As a result of that deformation of the throttle valve, the valve comes in contact with the inner wall of the intake passage. As a further concern, the shaft of the throttle valve may deform, due to contact between the throttle valve and the inner wall of the intake passage.

### SUMMARY OF THE INVENTION

The invention provides a throttle control device of an engine with supercharger such that contact of a throttle valve with an inner wall of an intake passage can be suppressed upon closing of the throttle valve which is in an open valve state.

A control device according to an aspect of the invention, for controlling an opening degree of a throttle valve that is provided in an intake passage of an engine with supercharger, includes an electronic control unit. The electronic control unit is configured to correct an opening degree of the throttle valve so that the throttle valve opens, when an operation state of the engine in which the throttle valve is closed is established, and a differential pressure between pressure upstream of the throttle valve and pressure downstream of the throttle valve in the intake passage is equal to or greater than a determination value. Thus, the opening degree of the throttle valve is corrected through the electronic control unit such that the throttle valve opens, to thereby suppress an increase in the differential pressure between the pressure upstream of the throttle valve and the pressure downstream of the valve in the intake passage. Therefore, even when a force derived from the differential pressure acts on the throttle valve, deformation of the throttle valve can be accordingly suppressed, and it becomes possible to suppress also contact of the throttle valve with the inner wall in the intake passage caused by the above deformation.

In the control device, the electronic control unit may be configured to correct the opening degree of the throttle valve such that the opening degree of the throttle valve becomes larger as the differential pressure increases from the determination value. In a case where the opening degree of the throttle valve is corrected so as to open only by a certain opening degree at the time when the throttle valve is being closed, irrespective of how large the differential pressure becomes with respect to the determination value, the opening degree of the throttle valve might be uselessly large, which would give rise to significant excess air being supplied to the engine through the intake passage. However, supply of excess air to the engine is suppressed by performing correction such that the opening degree of the throttle valve becomes larger as the differential pressure increases from the determination value, as described above.

In the control device, the electronic control unit may be configured to correct the opening degree of the throttle valve so that the throttle valve opens, when the differential pressure is equal to or greater than the determination value at a time when the throttle valve is being closed, from a high-load operation state of the engine. The differential pressure increases readily at the time when the throttle valve is being closed, from the high-load operation state of the engine. Accordingly, the throttle valve comes readily into contact with the inner wall of the intake passage due to the occurrence of deformation of the valve through the action of a force derived from the differential pressure. In such a situation, the opening degree of the throttle valve is corrected so that the throttle valve opens when the differential pressure is equal to or greater than the determination value. Accordingly, it becomes possible to suppress deformation of the throttle valve due to a force derived from the differential pressure that has increased, and it becomes possible to suppress contact of the throttle valve with the inner wall in the intake passage caused by the above deformation.

In the control device, the engine may include a bypass passage; the bypass passage may be provided at a portion, in the intake passage, upstream of the throttle valve that is positioned downstream of the supercharger; the bypass passage may connect a portion downstream of the supercharger and a portion upstream of the supercharger; the engine may include a bypass valve provided in the bypass passage; and the bypass valve may be configured to regulate flow of air in the bypass passage; the electronic control unit may be configured to open the bypass valve to cause the bypass passage to communicate, at the time when the throttle valve is being closed, from a high-load operation state of the engine; and the electronic control unit may correct the opening degree of the throttle valve so that the throttle valve opens, when the bypass passage is caused to communicate and the differential pressure is equal to or greater than the determination value. In this case, the electronic control unit opens the bypass valve, to bring the bypass passage to a communicating state, at the time when the throttle valve is being closed, from a high-load operation state of the engine, and corrects the opening degree of the throttle valve so that the throttle valve opens, when, in that state, the differential pressure is equal to or greater than the determination value.

As described above, when the bypass valve is opened to bring the bypass passage to a communicating state, the portion in the intake passage upstream of the throttle valve and downstream of the supercharger, and the portion upstream of the supercharger, communicate with each other via the bypass valve; the pressure in the intake passage, upstream of the throttle valve, drops in response thereto, and the differential pressure is reduced. As a result, when the differential pressure can be curtailed to be smaller than the determination value, the opening degree of the throttle valve need not be corrected; accordingly it becomes possible to suppress supply of excess air to the engine by virtue of that correction. By contrast, in a case where the differential pressure is not smaller than the determination value even when the bypass passage is in a communicating state through opening of the bypass valve, the opening degree of the throttle valve is corrected so that the differential pressure is reduced. As a result, it is possible to suppress deformation of the throttle valve through the action of a force derived from the differential pressure, and also suppress contact of the throttle valve with the inner wall of the intake passage due to such deformation.

It becomes therefore possible to suppress increases in the differential pressure by opening the bypass valve for bringing the bypass passage to a communicating state, without correcting, as much as possible, the opening degree of the throttle valve to a large opening degree, and it becomes possible to suppress supply of excess air to the engine through correction of the opening degree of the throttle valve so that the throttle valve opens. It becomes further possible to suppress deformation the throttle valve, and contact between the valve with the inner wall of the intake passage, due to such deformation, through correction of the opening degree of the throttle valve so that the latter opens, to reduce thereby the differential pressure, when the differential pressure cannot be fully reduced just through opening of the bypass valve for bringing the bypass passage to a communicating state.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating a throttle control device of an engine with supercharger;
FIG. 2 is a time chart illustrating the change over time of an accelerator operation amount, a throttle opening degree, pressure in an intake system of an engine, and differential pressure before and after a throttle valve (differential pressure between upstream and downstream of the throttle valve) in the intake system;
FIG. 3 is a flowchart illustrating a procedure of setting an opening degree limit value so that a throttle valve opens;
FIG. 4 is a graph illustrating the change of an opening degree limit value with respect to change in differential pressure before and after the throttle valve (differential pressure between upstream and downstream of the throttle valve) in an intake system of an engine;
FIG. 5 is a schematic diagram illustrating a throttle control device of an engine with supercharger;
FIG. 6 is a time chart illustrating the change over time of an accelerator operation amount, a throttle opening degree, an opening and closing mode of a bypass valve, pressure in an intake system of an engine, and differential pressure before and after the throttle valve (differential pressure between upstream and downstream of the throttle valve) in the intake system; and
FIG. 7 is a flowchart illustrating a procedure of setting an opening degree limit value so that a throttle valve opens.

### DETAILED DESCRIPTION OF EMBODIMENTS

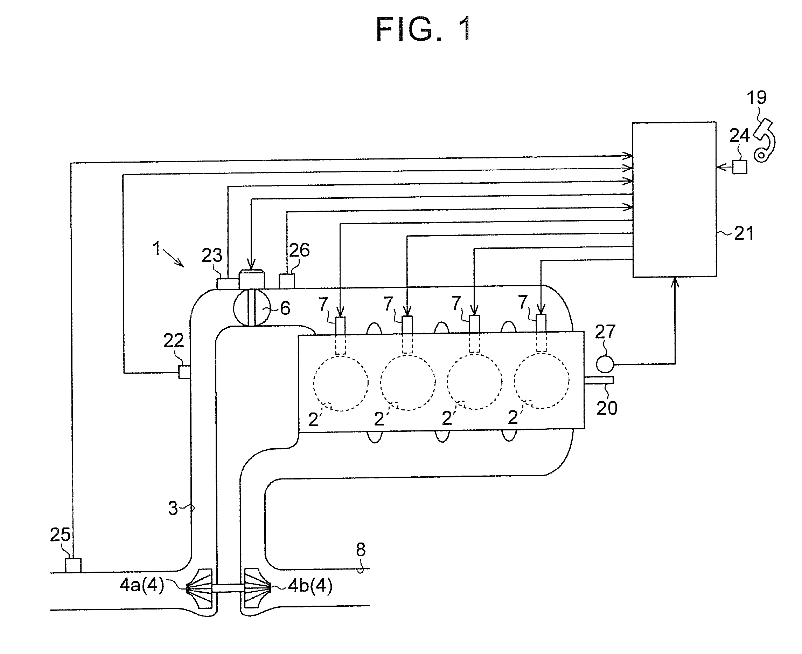

A first embodiment of a throttle control device of an engine with a supercharger will be explained next with reference to FIGS. 1 to 4.

An engine 1 illustrated in FIG. 1 is installed in a vehicle such as an automobile. A compressor wheel 4a of an exhaust turbine-type supercharger (turbocharger) 4 is provided in an intake passage 3 that is connected to a combustion chamber 2 of the engine 1. Further, a throttle valve 6 that regulates the amount of air that is supplied to the combustion chamber 2 of the engine 1 is provided in the intake passage 3, downstream of the compressor wheel 4a.

The amount of air that passes through the portion of the intake passage 3 corresponding to the throttle valve 6 varies with changes in the opening degree of the throttle valve 6 (throttle opening degree). The opening degree of the throttle valve 6 is smallest, and the amount of air that passes through the portion of the intake passage 3 corresponding to the throttle valve 6 becomes smallest, when the throttle valve 6 is closed.

Air that has passed through the intake passage 3 is supplied to the combustion chamber 2 of the engine 1, and fuel is supplied into the combustion chamber 2 by being injected, in an amount corresponding to the amount of air, through fuel injection valves 7. Combustion of the fuel inside the combustion chamber 2 drives the engine 1, and a crankshaft 20, being an output shaft of the engine 1, rotates as a result.

Exhaust gas after combustion of fuel inside the combustion chamber 2 is fed to an exhaust passage 8 connected to the combustion chamber 2. A turbine wheel 4b of the turbocharger 4 is provided in the exhaust passage 8. When the exhaust gas that flows through the exhaust passage 8 passes through the turbine wheel 4b, the turbine wheel 4b rotates, and the compressor wheel 4a as well rotates therewith. Air is thus supercharged into the combustion chamber 2 through the rotation of the compressor wheel 4a. The supercharging pressure in the in the engine 1 that is thus supercharged with by the turbocharger 4 rises with increasing flow rate of the air that is supplied to the combustion chamber 2, and with increasing flow rate of the exhaust gas discharged out of the combustion chamber 2, accompanying an increase in engine rotational speed.

The vehicle in which the engine 1 is installed is also provided with an electronic control unit 21 for controlling various items in the engine 1. The electronic control unit 21 is provided with, for instance, a central processing unit (CPU) that executes computation processes pertaining to the above various control items, a read only memory (ROM) in which programs and data necessary for control are stored, a random access memory (RAM) in which for instance computation results of the CPU are temporarily stored, and input-output ports for input and output of signals to/from the external devices.

Various sensors enumerated below are connected to the input port of the electronic control unit 21:
- a throttle position sensor 23 that detects an opening degree of the throttle valve 6 (throttle opening degree);
- an accelerator position sensor 24 that detects an operation amount of an accelerator pedal 19 (accelerator operation amount) that is operated by the driver of the vehicle;
- an air flow meter 25 that detects the amount of air passing through the intake passage 3;
- a pressure sensor 22 that detects the pressure in the intake passage 3, upstream of the throttle valve 6 and downstream of the compressor wheel 4a;
- a pressure sensor 26 that detects the pressure in the intake passage 3 and is downstream of the throttle valve 6; and
- a crank position sensor 27 for detecting the rotational speed of the crankshaft 20 of the engine 1.

Driving circuits of various devices for controlling the operation of the engine 1, for instance a driving circuit of the fuel injection valves 7 and a driving circuit of the throttle valve 6, are connected to the output port of the electronic control unit 21.

The electronic control unit 21 determines, on the basis of detection signals inputted from the various sensors, the operation state of the engine 1, namely engine rotational speed and engine load (amount of air supplied to the combustion chamber 2 per cycle of the engine). The engine rotational speed is obtained on the basis of a detection signal from the crank position sensor 27. The engine load is calculated from the engine rotational speed and the amount of intake air of the engine 1 as obtained on the basis of detection signals of the accelerator position sensor 24, the throttle position sensor 23, the air flow meter 25 and so forth. The electronic control unit 21 outputs instruction signals to the various driving circuits connected to the output port, in accordance with operation state of the engine 1, namely engine rotational speed and engine load. Fuel injection amount control, opening degree control of the throttle valve 6 and the like in the engine 1 are thus executed via the electronic control unit 21. The electronic control unit 21 that executes opening degree control of the throttle valve 6 corrects the opening degree of the throttle valve 6 so that the throttle valve 6 opens at the time when the throttle valve 6 is being closed.

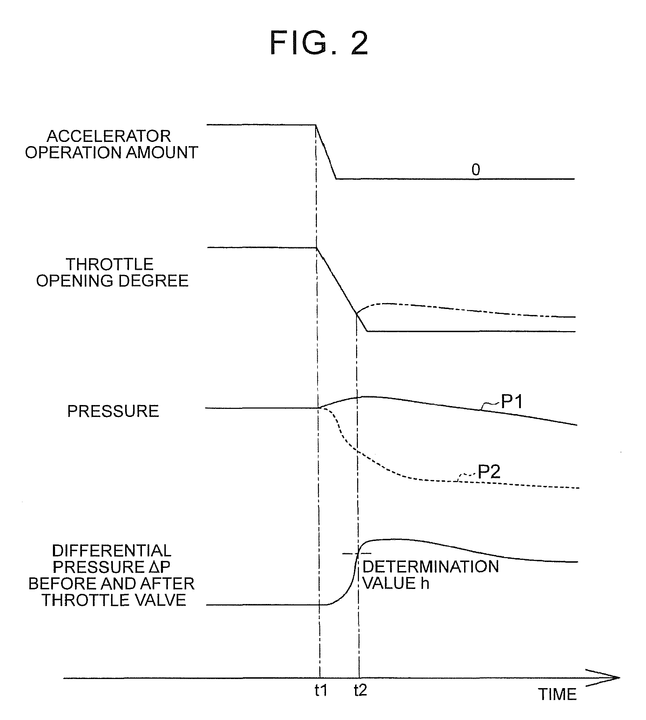

FIG. 2 illustrates the manner in which the accelerator operation amount, the throttle opening degree, the pressure in the intake system of the engine 1, and a differential pressure before and after the throttle valve (between upstream and downstream of the throttle valve) in the intake system change over time.

As illustrated in the graph of accelerator operation of FIG. 2, when the driver reduces the accelerator operation amount down to "0" from the point in time of timing t1 in order to, for instance, decelerate the vehicle, the throttle valve 6 of the engine 1, which is in an open valve state, closes in response to the reduction of the accelerator operation amount, as denoted for instance by the solid line in the graph of throttle opening degree of FIG. 2. In the engine 1 having the turbocharger 4 assembled therewith, the pressure upstream of the throttle valve 6 that is provided in the intake passage 3, and downstream of the compressor wheel 4a, increases through the operation of the turbocharger 4. Accordingly, when the throttle valve 6 closes (t1 onwards) as described above, a first pressure P1 denoted by a solid line in the graph of pressure in FIG. 2, and being the pressure upstream of the throttle valve 6, is maintained at a comparatively high value through the inertial action of the turbocharger 4 (compressor wheel 4a). By contrast, a second pressure P2 denoted by a dashed line in the graph of pressure of FIG. 2, and being the pressure in the intake passage 3 downstream of the throttle valve 6, drops promptly when the throttle valve 6 closes as described above. Accordingly, a differential pressure ΔP of the first pressure P1 and the second pressure P2 increases, as illustrated for timing t1 onwards in the graph of the differential pressure before and after the throttle valve of FIG. 2, and a concern arises that a force derived from the differential pressure ΔP may act on the throttle valve 6, causing the throttle valve 6 to deform. A further concern arises in that when the throttle valve 6 and the inner wall of the intake passage 3 come into contact, due to such deformation of the throttle valve 6, the shaft of the throttle valve 6 as well may deform as a result of that contact.

In order to counter this problem, the electronic control unit 21 corrects the opening degree of the throttle valve 6, so that the throttle valve 6 opens, when the differential pressure ΔP is equal to or greater than a determination value h (timing t2), in an engine operation state in which the throttle valve 6 is to be closed.

The electronic control unit 21 restricts the opening degree of the throttle valve 6 from becoming smaller than an established opening degree limit value OL. Accordingly, closing of the throttle valve 6 is restricted according to the opening degree limit value OL, when the accelerator operation amount is reduced to "0"; as a result, the opening degree of the throttle valve 6 varies as denoted by the solid line in the graph of the throttle opening degree of FIG. 2, as described above.

The electronic control unit 21 sets the opening degree limit value OL such that the opening degree of the throttle valve 6 becomes yet larger when the differential pressure ΔP is equal to or greater than the determination value h (timing t2). By modifying thus the opening degree limit value OL such that the opening degree of the throttle valve 6 becomes larger, closing of the throttle valve 6 is thus restricted according to the opening degree limit value OL. A state is thus established in which the opening degree of the throttle valve 6 is corrected so as to be yet larger, for instance as denoted by the two-dot chain line in the graph of throttle opening degree of FIG. 2.

As described above, the opening degree of the throttle valve 6 is corrected so as to increase at the time when the throttle valve 6 is being closed, to suppress as a result an increase of the differential pressure ΔP. Even when a force derived from the differential pressure ΔP acts on the throttle valve 6, deformation of the throttle valve 6 can thus be accordingly suppressed. It becomes also possible to suppress deformation of the shaft of the throttle valve 6 arising from contact of the throttle valve 6 with the inner wall of the intake passage 3, caused by the above deformation.

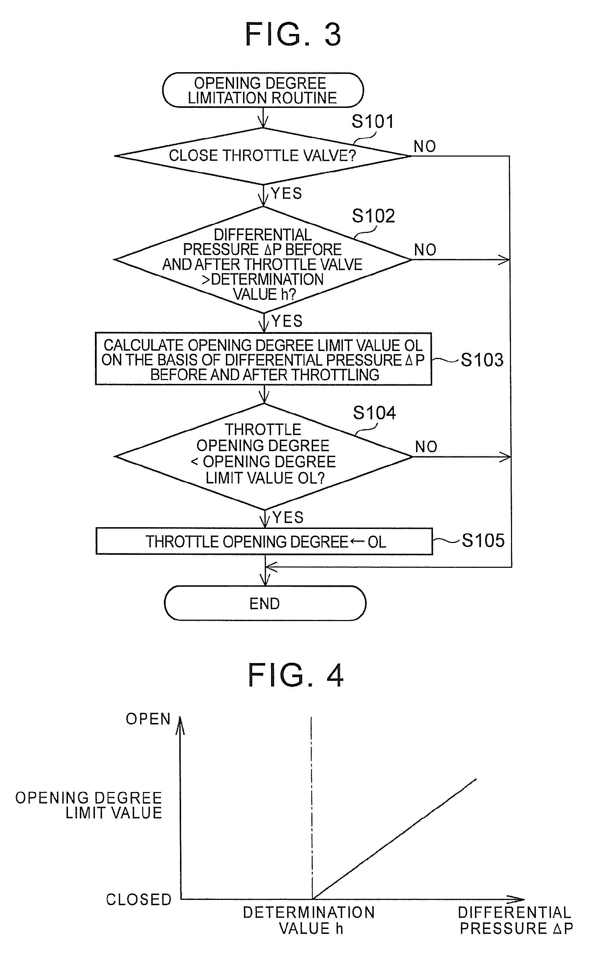

FIG. 3 is a flowchart illustrating an opening degree limitation routine for setting the opening degree limit value OL of the throttle valve 6 so that the throttle valve 6 opens, as described above. The opening degree limitation routine is executed periodically, at interruptions every predetermined time, by the electronic control unit 21.

As a process of step 101 (S101) of the routine, the electronic control unit 21 determines whether the engine operation state is a state of closing the throttle valve 6 or not, specifically, determines whether the accelerator operation amount is "0" or not. At this time, the change in closing of the throttle valve 6 is limited according to the opening degree limit value OL, as described above, and, accordingly, the opening degree of the throttle valve 6 is equal to the opening degree limit value OL. Situations where the throttle valve 6 is to be closed include a situation wherein the throttle valve 6 closes accompanying for instance a reduction of the accelerator operation amount down to "0", by the driver, in order to decelerate the vehicle from a high load state (for instance, full load state) of the engine 1. In such a situation, the differential pressure ΔP of the first pressure P1 and the second pressure P2 (differential pressure before and after the throttle valve 6) increases readily.

When the process of S101 yields a negative determination, the electronic control unit 21 temporarily terminates the opening degree limitation routine. When on the other hand the process of S101 yields an affirmative determination, the process proceeds to S102. As the process of S102, the electronic control unit 21 determines whether or not the differential pressure ΔP is equal to or greater than the determination value h. Regarding the determination value h that is used herein, a value established beforehand, for instance experimentally, may conceivably be used as an allowable upper limit of the differential pressure ΔP such that the throttle valve 6 does not deform when acted upon by a force derived from the differential pressure ΔP. In a case where the differential pressure ΔP is smaller than the determination value h and S102 yields a negative determination, the electronic control unit 21 terminates temporarily the opening degree limitation routine. In a case where, on the other hand, the differential pressure ΔP is equal to or greater than the determination value h and S102 yields thus an affirmative determination, the process proceeds to S103. The purpose of the process from S103 onwards is to correct the opening degree of the throttle valve 6 to increase the opening degree so that the throttle valve 6 opens even in an engine operation state in which the throttle valve 6 is to be closed.

As the process of S103, the electronic control unit 21 calculates the opening degree limit value OL on the basis of the differential pressure ΔP. The opening degree limit value OL thus calculated is variably set so as to increase gradually as the differential pressure ΔP increases with respect to the determination value h, as illustrated in FIG. 4. As the process of S104, the electronic control unit 21 determines whether or not the current throttle opening degree is a value further on the closing side (smaller value) than the above variably-set opening degree limit value OL. When a negative determination is obtained herein, the electronic control unit 21 temporarily terminates the opening degree limitation routine. When the determination is affirmative, on the other hand, the process proceeds to S105. As the process of S105, the electronic control unit 21 regulates the opening degree of the throttle valve 6 to the opening degree limit value OL having been set as described above.

Therefore, the opening degree limit value OL is variably set, in S103, to increase gradually as the differential pressure ΔP increases with respect to the determination value h, and the opening degree of the throttle valve 6 is restricted from becoming smaller than the opening degree limit value OL. The opening degree of the throttle valve 6 is corrected so as to become gradually larger as the differential pressure ΔP increases with respect to the determination value h. Herein, variable setting of the opening degree limit value OL is performed such that the throttle valve 6 does not come into contact with the inner wall of the intake passage 3 when a force derived from the differential pressure ΔP acts on the throttle valve 6, and such that the opening degree limit value OL takes on a value that is as small as possible (value such that the opening degree of the throttle valve 6 is near full closing).

The operation of the throttle control device of the engine with supercharger 1 will be explained next. The opening degree of the throttle valve 6 is corrected so that the throttle valve 6 opens, when the differential pressure ΔP of the first pressure P1 and the second pressure P2 is equal to or greater than the determination value h, in an engine operation state in which the throttle valve 6 is to be closed. The opening degree of the throttle valve 6 is thus corrected so as to increase, even in a state in which the throttle valve 6 is to be closed, so that an increase in the differential pressure ΔP is suppressed as a result, i.e. there is suppressed an increase in the difference between the pressure in the intake passage 3 upstream of the throttle valve 6 (corresponding to the first pressure P1) and the pressure downstream of the valve 6 (corresponding to the second pressure P2). Therefore, even when a force derived from the differential pressure ΔP acts on the throttle valve 6, deformation of the throttle valve 6 can be accordingly suppressed. It becomes also possible to suppress deformation of the shaft of the throttle valve 6 arising from contact of the valve 6 with the inner wall of the intake passage 3, caused by the above deformation.

Excess air is undeniably supplied to the combustion chamber 2 of the engine 1 in a case where the opening degree of the throttle valve 6 is corrected so that the throttle valve 6 opens, when the differential pressure ΔP is equal to or greater than the determination value h, as described above. In a case where the opening degree of the throttle valve 6 is corrected so as to open only by a certain opening degree, irrespective of how large the differential pressure ΔP is with respect to the determination value h, the opening degree of the throttle valve 6 might therefore be uselessly large, which would give rise to significant excess air being supplied to the engine 1 through the intake passage 3, even though the engine operation state is a state in which the throttle valve 6 is to be closed. The opening degree of the throttle valve 6 is however corrected so as to increase gradually as the differential pressure ΔP becomes larger with respect to the determination value h; as a result, useless increase in the opening degree of the throttle valve 6 is suppressed to the utmost extent. It becomes therefore possible to suppress, to the utmost extent, supply of excess air into the combustion chamber 2 of the engine 1, through the intake passage 3, due to a useless increase in the opening degree of the throttle valve 6, in an engine operation state in which the throttle valve 6 is to be closed.

The differential pressure ΔP increases readily at the time when the throttle valve 6 is being closed, from the high-load operation state of the engine 1. Accordingly, the valve 6 comes readily into contact with the inner wall of the intake passage 3 due to the occurrence of deformation of the throttle valve 6 through the action of a force derived from the differential pressure ΔP. Also in such a situation, the opening degree of the throttle valve 6 is corrected so as to increase when the differential pressure ΔP is equal to or greater than the determination value h, and as a result, it becomes possible to suppress deformation of the throttle valve 6 due to a force derived from the differential pressure ΔP that has increased, and to suppress also contact of the throttle valve 6 with the inner wall of the intake passage 3 due to such deformation.

The present embodiment explained in detail above elicits the following effects. (1) The opening degree of the throttle valve 6 is corrected so that the throttle valve 6 opens, when the differential pressure ΔP is equal to or greater than the determination value h, even in an engine operation state in which the valve 6 is to be closed. An increase in the differential pressure ΔP is suppressed thereby. As a result, when a force derived from the differential pressure ΔP acts on the valve 6, contact of the valve 6 with the inner wall of the intake passage 3 due to deformation of the throttle valve 6 can be suppressed. It becomes also possible to suppress deformation of the shaft of the throttle valve 6, arising from contact of the valve 6 with the inner wall of the intake passage 3.

(2) The opening degree of the throttle valve 6 is corrected so as to become gradually larger as the differential pressure ΔP increases with respect to the determination value h. Accordingly, the opening degree of the throttle valve 6 does not increase uselessly. It becomes possible as a result to suppress supply of excess air into the combustion chamber 2 of the engine 1, through the intake passage 3, due to a useless increase in the opening degree of the throttle valve 6, in an engine operation state in which the throttle valve 6 is to be closed.

(3) The differential pressure ΔP increases readily at the time when the throttle valve 6 is being closed, from a high-load operation state of the engine 1, but also in such a situation, the opening degree of the throttle valve 6 is corrected so that the throttle valve 6 opens when the differential pressure ΔP is equal to or greater than the determination value h; as a result, it becomes possible to suppress an increase in the differential pressure ΔP. It becomes possible to suppress deformation of the throttle valve 6 due to a force derived from the differential pressure ΔP that has increased, and to suppress also contact of the throttle valve 6 with the inner wall of the intake passage 3 due to such deformation.

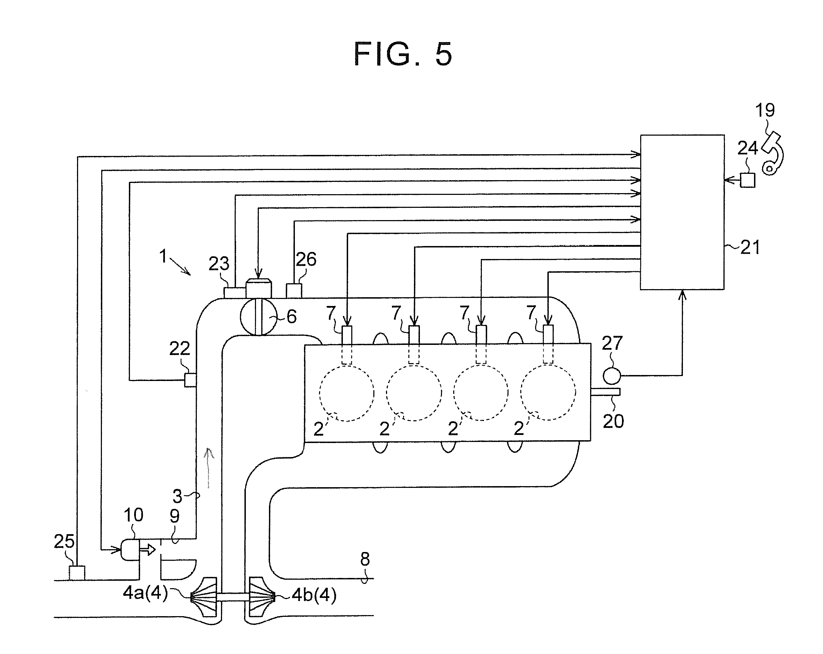

A second embodiment of a throttle control device of an engine with supercharger will be explained next with reference to FIGS. 5 to 7.

As illustrated in FIG. 5, a bypass passage 9 is connected, to the intake passage 3 of the engine 1 in this embodiment, at a portion, in the intake passage 3, upstream of the throttle valve 6 and downstream of the compressor wheel 4a, and a portion upstream of the compressor wheel 4a. The bypass passage 9 is provided with a bypass valve 10 that regulates the flow of air between the portion, in the intake passage 3, upstream of the throttle valve 6 and downstream of the compressor wheel 4a, and the portion upstream of the compressor wheel 4a.

The regulation operation of the bypass valve 10 is controlled through the electronic control unit 21. The electronic control unit 21 sets normally the bypass passage 9 to a cutoff state, by closing the bypass valve 10. In this case, the portion, in the intake passage 3, upstream of the throttle valve 6 and downstream of the compressor wheel 4a, and the portion upstream of the compressor wheel 4a, do not communicate with each other via the bypass passage 9. At the time when the throttle valve 6 is being closed, from the high-load operation state of the engine 1, the electronic control unit 21 opens the bypass valve 10 to bring thereby the bypass passage 9 to a communicating state. In this case, the portion, in the intake passage 3, upstream of the throttle valve 6 and downstream of the compressor wheel 4a, and the portion upstream of the compressor wheel 4a, communicate with each other via the bypass passage 9. The electronic control unit 21 corrects the opening degree of the throttle valve 6 so that the throttle valve 6 opens, when the differential pressure ΔP is equal to or greater than the determination value h, also with the bypass passage 9 in a communicating state.

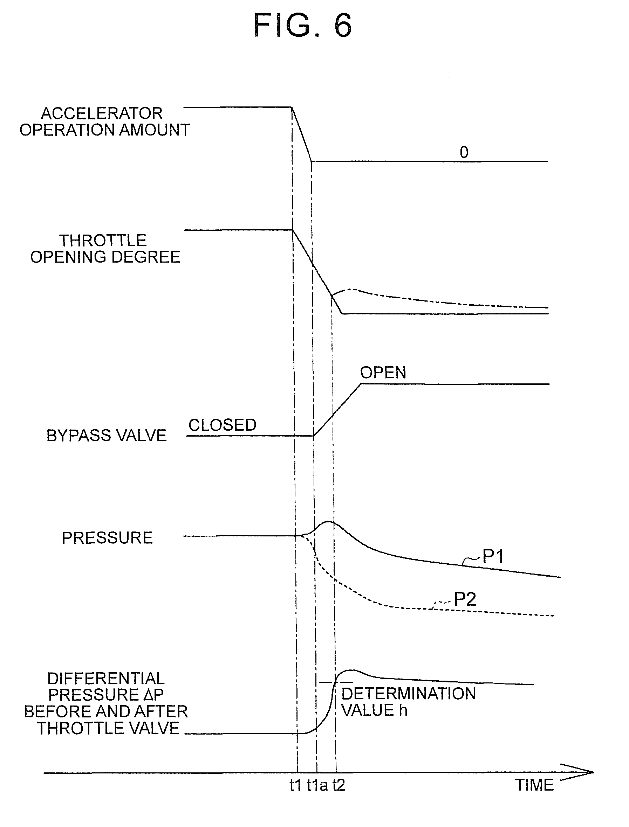

FIG. 6 illustrates the change over time of accelerator operation amount, throttle opening degree, an opening and closing mode of the bypass valve 10, pressure in the intake system of the engine 1, and differential pressure before and after the throttle valve (between upstream and downstream of the throttle valve 6) in the intake system.

As illustrated in the graph of accelerator operation of FIG. 6, when the driver reduces the accelerator operation amount down to "0" from the point in time of timing t1 in order to, for instance, decelerate the vehicle, the throttle valve 6 of the engine 1, which is in an open valve state, closes in response to the reduction of the accelerator operation amount, as denoted for instance by the solid line in the graph of throttle opening degree of FIG. 6. When the throttle valve 6 closes thus, the first pressure P1 (solid line) and the second pressure P2 (dashed line) evolve as illustrated in the graph of pressure in FIG. 6, and the differential pressure ΔP evolves in response thereto, as denoted by the graph of differential pressure before and after the throttle valve 6 of FIG. 6.

At the time when the throttle valve 6 is being closed from the high-load operation state of the engine 1, the electronic control unit 21 starts opening the bypass valve 10, as denoted by the graph of the bypass valve in FIG. 6, from the point in time (timing T1a) at which the accelerator operation amount becomes "0". Thus, an increase of the differential pressure ΔP can be suppressed when the first pressure P1 can be lowered promptly by bringing the bypass passage 9 to a communicating state through opening of the bypass valve 10. When the differential pressure ΔP can be curtailed to be smaller than the determination value h by opening the bypass valve 10, then the opening degree of the throttle valve 6 need not be corrected so that the throttle valve 6 opens; accordingly, it becomes possible to suppress supply of excess air to the engine 1, through correction such that the opening degree of the throttle valve 6 increases.

In a case where, on the other hand, the first pressure P1 does not drop promptly due to a response delay in opening of the bypass valve 10, even when the bypass valve 10 has started being opened at the timing t1a, the differential pressure ΔP may in some instances become equal to or greater than the determination value h, without being suppressed to be smaller than the determination value h. In such cases, the electronic control unit 21 corrects the opening degree of the throttle valve 6 so that the throttle valve 6 opens, through setting of a larger value as the opening degree limit value OL. As a result, the change in closing of the throttle valve 6 is limited according to the opening degree limit value OL, and the opening degree of the throttle valve 6 at the time when the throttle valve 6 is being closed is brought to a state in which the opening degree of the throttle valve 6 is corrected so that the throttle valve 6 opens, for instance as denoted by the two-dot chain line in the graph of the throttle opening degree in FIG. 6. By correcting the opening degree of the throttle valve 6 so that the throttle valve 6 opens, the differential pressure ΔP is reduced, to thereby suppress deformation of the throttle valve 6 through the action of a force derived from the differential pressure ΔP, and suppress contact of the throttle valve 6 with inner wall of the intake passage 3 due to such deformation.

Therefore, it becomes possible to suppress an increase in the differential pressure ΔP by opening the bypass valve 10 for bringing the bypass passage 9 to a communicating state, without correcting, as much as possible, the opening degree of the throttle valve 6 at the time when the throttle valve 6 is being closed, to a large opening degree. As a result, it becomes possible to suppress supply of excess air to the combustion chamber 2 of the engine 1, through correction of the opening degree of the throttle valve 6 so that the throttle valve 6 opens. Further, it becomes possible to suppress deformation of the throttle valve 6, and to suppress contact of the throttle valve 6 with the inner wall of the intake passage 3 due to that deformation due to reduction of the differential pressure ΔP by correcting the opening degree of the throttle valve 6 so that the throttle valve 6 opens, when the differential pressure ΔP cannot be fully reduced just through opening of the bypass valve 10.

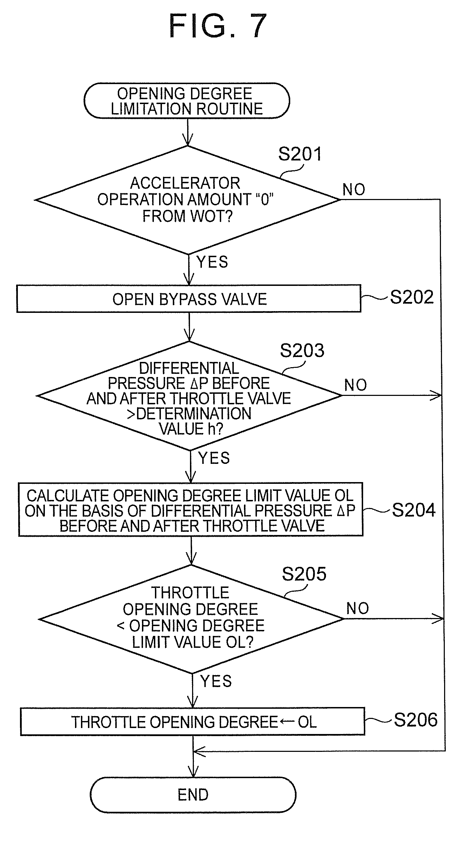

FIG. 7 is a flowchart illustrating an opening degree limitation routine of the present embodiment. The opening degree limitation routine is executed periodically, at interruptions every predetermined time, by the electronic control unit 21.

As the process of S201 in the routine, the electronic control unit 21 determines whether or not the accelerator operation amount has been set to "0" from a high load state (for instance, full load state) of the engine 1, in other words, determines whether or not the engine operation state is an engine operation state in which the throttle valve is to be closed. When the process of S201 yields an affirmative determination, the electronic control unit 21 temporarily terminates the opening degree limitation routine, and when the process of S201 yields a negative determination, the process proceeds to S202. As the process of S202, the electronic control unit 21 opens the bypass valve 10, to bring the bypass passage 9 to a communicating state.

As the process of S203, the electronic control unit 21 determines whether or not, under such situation, the differential pressure ΔP is equal to or greater than the determination value h. In a case where the differential pressure ΔP is smaller than the determination value h and S203 yields a negative determination, the electronic control unit 21 terminates temporarily the opening degree limitation routine. In a case where, on the other hand, the differential pressure ΔP is equal to or greater than the determination value h and S203 yields thus an affirmative determination, the process proceeds to S204. The process from S204 onwards corresponds to the process from S103 onwards in the opening degree limitation routine (FIG. 3) of the first embodiment.

As the process of S204, the electronic control unit 21 calculates the opening degree limit value OL on the basis of the differential pressure ΔP, and as the process of subsequent S205, determines whether or not the current throttle opening degree is a value smaller than the opening degree limit value OL. When S205 yields a negative determination, the electronic control unit 21 temporarily terminates the opening degree limitation routine. When the determination is affirmative, on the other hand, the process proceeds to S206. As the process of S206, the electronic control unit 21 regulates the opening degree of the throttle valve 6 to the opening degree limit value OL.

In addition to effects (1) through (3) described for the first embodiment, the present embodiment explained in detail above elicits also the following effects. (4) At the time when the throttle valve 6 is being closed, from a high-load operation state of the engine 1 (when the accelerator operation amount becomes "0"), the electronic control unit 21 opens the bypass valve 10, to bring thereby the bypass passage 9 to a communicating state; as a result, the first pressure P1 is reduced, whereby an increase in the differential pressure ΔP is suppressed. Also in such a situation, the electronic control unit 21 corrects the opening degree of the throttle valve 6 so that the throttle valve 6 opens, when the differential pressure ΔP is equal to or greater than the determination value h. Therefore, an increase in the differential pressure ΔP is suppressed by opening the bypass valve 10 without correcting, as much as possible, the opening degree of the throttle valve 6 so that the throttle valve 6 opens; accordingly, it becomes possible to suppress supply of excess air into the combustion chamber 2 of the engine 1 due to correction of the opening degree of the throttle valve 6 so that the throttle valve 6 opens. Further, it becomes possible to suppress deformation of the throttle valve 6, and to suppress contact of the throttle valve 6 with the inner wall of the intake passage 3 due to that deformation, through reduction of the differential pressure ΔP by correcting the opening degree of the throttle valve 6 so that the throttle valve 6 opens, when the differential pressure ΔP cannot be fully reduced just through opening of the bypass valve 10.

The above embodiments can be modified for instance as described below. In the second embodiment, the bypass valve 10 may be set to remain closed, or may be set to open, at the time when the throttle valve 6 is being closed, from a state in which the engine 1 is not in a high load state (when the accelerator operation amount becomes "0"). In a case where the bypass valve 10 is kept closed, it is determined whether or not the differential pressure ΔP is equal to or greater than the determination value h, with the valve 10 in a closed valve state, and the opening degree of the throttle valve 6 is corrected so that the throttle valve 6 opens, on the basis of a determination to the effect that the differential pressure ΔP is equal to or greater than the determination value h. In a case where the bypass valve 10 is opened, it is determined whether or not the differential pressure ΔP is equal to or greater than the determination value h, with the valve 10 in an open valve state, and the opening degree of the throttle valve 6 is corrected so that the throttle valve 6 opens, on the basis of a determination to the effect that the differential pressure ΔP is equal to or greater than the determination value h.

In the first embodiment and the second embodiment, the opening degree limit value OL that limits closing of the throttle valve 6 is set to a value for which the opening degree of the throttle valve 6 is larger the larger the differential pressure ΔP is with respect to the determination value h, when the differential pressure ΔP is equal to or greater than the determination value h, so that, as a result, the opening degree of the throttle valve 6 at the time when the throttle valve 6 is being closed is corrected so as to increase gradually, but this configuration is not essential. Specifically, the opening degree limit value OL may be modified to a fixed value, when the differential pressure ΔP is equal to or greater than the determination value h, whereby the opening degree of the throttle valve 6 is corrected such that the throttle valve 6 opens by a fixed opening degree.

In the first embodiment, the opening degree of the throttle valve 6 may be set to be corrected so that the throttle valve 6 opens, on the basis of a determination to the effect that the differential pressure ΔP is equal to or greater than the determination value h, only at the time when the throttle valve 6 is being closed from a state in which the engine 1 is not in a full load state.

Regarding the determination value h that is used herein, a value established beforehand, for instance experimentally, is conceivably used as a allowable upper limit of the differential pressure ΔP such that the throttle valve 6 does not deform when acted upon by a force derived from the differential pressure ΔP, but such a value need not necessarily be used, and some other value may be resorted to.

In FIG. 4, the slope of the change in the value of the opening degree limit value OL with respect to the increase in the differential pressure ΔP can be modified, as appropriate, in accordance with the inner diameter (throttle bore diameter) of the portion of the intake passage 3 corresponding to the throttle valve 6. Preferably, the slope is made smaller as the throttle bore diameter increases.

In the first embodiment and the second embodiment, the first pressure P1 is not limited to a value detected by the pressure sensor 22, and may be a value estimated on the basis of the engine operation state. The second pressure P2 as well is not limited to a value detected by the pressure sensor 26, and may be a value estimated on the basis of the engine operation state.

## Claims

1. A control device for controlling an opening degree of a throttle valve (6) that is provided in an intake passage (3) of an engine (1) with a supercharger (4), the control device comprising:
an electronic control unit (21) configured to correct the opening degree of the throttle valve (6) so that the throttle valve (6) opens, when an operation state of the engine (1) in which the throttle valve (6) is closed is established, and a differential pressure between pressure upstream of the throttle valve (6) and pressure downstream of the throttle valve (6) in the intake passage (3) is equal to or greater than a determination value.

2. The control device according to claim 1, wherein
the electronic control unit (21) is configured to correct the opening degree of the throttle valve (6) such that the opening degree of the throttle valve (6) becomes larger as the differential pressure increases from the determination value.

3. The control device according to claim 1 or 2, wherein
the electronic control unit (21) is configured to correct the opening degree of the throttle valve (6) so that the throttle valve (6) opens, when the differential pressure is equal to or greater than the determination value at a time when the throttle valve (6) is being closed, from a high-load operation state of the engine (1).

4. The control device according to any one of claims 1 to 3, wherein
the engine (1) includes a bypass passage (9),
the bypass passage (9) is provided at a portion in the intake passage (3) upstream of the throttle valve (6) that is positioned downstream of the supercharger (4),
the bypass passage (9) connects a portion downstream of the supercharger (4) and a portion upstream of the supercharger (4),
the engine (1) includes a bypass valve (10) provided in the bypass passage (9),
the bypass valve (10) is configured to regulate the flow of air in the bypass passage (9),
the electronic control unit (21) is configured to open the bypass valve (10) to cause the bypass passage (9) to communicate, at the time when the throttle valve (6) is being closed, from a high-load operation state of the engine (1), and
the electronic control unit (21) is configured to correct the opening degree of the throttle valve (6) so that the throttle valve (6) opens, when the bypass passage (9) is caused to communicate and the differential pressure is equal to or greater than the determination value.
